# EUROPÄISCHE PATENTSCHRIFT

(11) **EP 1 777 386 B1**
(45) Veröffentlichungstag und Bekanntmachung des Hinweises auf die Patenterteilung: **09.07.2008**
(21) Anmeldenummer: 05109709.5
(22) Anmeldetag: 19.10.2005
(51) Int. Cl.: F02B 27/02

(54) **Luftansaugkanalsystem mit in der Länge stufenlos verstellbarem Ansaugkanal und Verfahren zur Veränderung der Länge eines derartigen Ansaugkanals**
Air intake system with continuously variable length intake tube and method for the variation of the length of such an intake tube
Système d'admission d'air avec conduite d'admission ajustable en longueur continu et méthode pour le changement de la longueur d'une telle conduite

(43) Veröffentlichungstag der Anmeldung: 25.04.2007
(73) Patentinhaber: Ford Global Technologies, LLC, Dearborn, MI 48126 (US)
(72) Erfinder: Kluge, Torsten, 51491, Overath (DE); Smiljanovski, Vanco, 50181, Bedburg (DE)
(74) Vertreter: Drömer, Hans-Carsten

(56) Entgegenhaltungen:
- DE-B- 1 009 429
- US-A- 5 406 913
- PATENT ABSTRACTS OF JAPAN Bd. 010, Nr. 029 (M-451), 5. Februar 1986 (1986-02-05) & JP 60 184924 A (MAZDA KK), 20. September 1985 (1985-09-20)
- PATENT ABSTRACTS OF JAPAN Bd. 009, Nr. 219 (M-410), 6. September 1985 (1985-09-06) & JP 60 079118 A (MAZDA KK), 4. Mai 1985 (1985-05-04)
- PATENT ABSTRACTS OF JAPAN Bd. 009, Nr. 092 (M-373), 20. April 1985 (1985-04-20) & JP 59 218329 A (YAMAHA HATSUDOKI KK), 8. Dezember 1984 (1984-12-08)
- PATENT ABSTRACTS OF JAPAN Bd. 009, Nr. 282 (M-428), 9. November 1985 (1985-11-09) & JP 60 125725 A (MAZDA KK), 5. Juli 1985 (1985-07-05)

## Beschreibung

Die Erfindung betrifft ein Luftansaugkanalsystem für eine Brennkraftmaschine mit mindestens einem Ansaugkanal, der zur Versorgung der Brennkraftmaschine mit Verbrennungsluft bzw. Frischgemisch dient und hierzu einerseits zu einem Einlaßbereich mindestens eines Zylinders der Brennkraftmaschine führt und andererseits in einen Sammelbehälter mündet und dessen Länge l in Abhängigkeit von der Drehzahl der Brennkraftmaschine stufenlos veränderbar ist.

Des Weiteren betrifft die Erfindung ein Verfahren zur stufenlosen drehzahlabhängigen Variation der Länge l eines Ansaugkanals eines Luftansaugkanalsystems einer Brennkraftmaschine, wobei der Ansaugkanal zur Versorgung der Brennkraftmaschine mit Verbrennungsluft bzw. Frischgemisch dient und hierzu einerseits zu einem Einlaßbereich mindestens eines Zylinders der Brennkraftmaschine führt und andererseits in einen Sammelbehälter mündet.

Die intermittierende Verbrennung einer herkömmlichen 4-Takt-Hubkolben-Brennkraftmaschine führt zusammen mit dem mittels Ventilen gesteuerten Ladungswechsel sowohl im Ansaugtrakt als auch im Abgastrakt zu sehr ungleichförmigen dynamischen Strömungsvorgängen der jeweiligen gasförmigen Medien, nämlich der Verbrennungsluft bzw. des Frischgemisches einerseits und den Abgasen andererseits.

Während des Ladungswechsels werden die heißen Abgase durch die Auslaßöffnungen des Brennraums in den Abgastrakt ausgeschoben und frische Verbrennungsluft gegebenenfalls zusammen mit bereits eingespritztem Kraftstoff wird über die Einlaßöffnungen des Brennraums aus dem Ansaugtrakt angesaugt. Der Druck des gasförmigen Mediums variiert dabei entlang des Strömungsweges im Abgasrohr bzw. Ansaugkanal. Derartige lokale Druckstörungen breiten sich in gasförmigen Medien als Wellen aus, Idealerweise als sinusförmige Wellen.

Eine sich mit Schallgeschwindigkeit ausbreitende Welle wird am Ende des Abgasrohres bzw. des Ansaugkanals reflektiert. Dabei ergeben sich für offene und geschlossene Rohrenden unterschiedliche Reflexionsbedingungen. Während eine Überdruckwelle an einem geschlossenen Rohrende als Überdruckwelle reflektiert wird, kommt es an einem offenen Rohrende zu einer Phasenverschiebung von 180°. Dies führt dazu, daß eine am offenen Rohrende ankommende Unterdruckwelle als Überdruckwelle reflektiert wird. Entsprechend wird eine Überdruckwelle an einem offenen Rohrende als Unterdruckwelle reflektiert. Die Strömung im Rohr ergibt sich dann aus der Überlagerung der vorlaufenden und reflektierten Welle.

Diese dynamischen Wellenvorgänge im Ansaug- bzw. Abgastrakt werden nach dem Stand der Technik zur Optimierung des Ladungswechsels genutzt. Um diese Effekte für die Optimierung des Ladungswechsels nutzbar zu machen, kann beispielsweise die Länge des Abgasrohres so gewählt werden, daß die beim Öffnen des Auslaßventils in das Abgasrohr entlassene Drucküberhöhung am offenen Rohrende reflektiert wird und die reflektierte Unterdruckwelle an der Auslaßöffnung des Brennraums ankommt kurz bevor das Auslaßventil schließt, so daß der zusätzliche Unterdruck die Evakuierung des Brennraums d.h. das durch den Kolben initiierte Ausschieben der Abgase unterstützt.

Andererseits kann der Ansaugtrakt in der Art ausgelegt werden, daß gegen Ende des Ansaugtaktes an der Einlaßöffnung eine Überdruckwelle ankommt, die zu einer Verdichtung und damit zu einem gewissen Nachladeeffekt führt. Die hierzu erforderliche Überdruckwelle wird durch Reflexion der zu Beginn des Ansaugens - wenn das Einlaßventil öffnet - in das Ansaugrohr bzw. in den Ansaugkanal entlassene Unterdruckwelle am offenen Ende des Ansaugkanals generiert. Hierzu muß wiederum der Ansaugkanal in seiner Länge abgestimmt werden.

In der Praxis erweist es sich aber als schwierig, die beschriebenen Effekte für die Optimierung des Ladungswechsels nutzbar zu machen, da die zur Erzielung des Nachladeeffektes erforderliche Länge l des Ansaugkanals von der Drehzahl der Brennkraftmaschine abhängt. Näherungsweise gilt für die Länge l des abgestimmten Ansaugkanals:
l ≈ a/6n
bzw.
1 ~ 1/n
, wobei a für die Schallgeschwindigkeit und n für die Drehzahl der Brennkraftmaschine steht.

Folglich wirkt sich eine Saugrohrabstimmung nur in einem sehr begrenzten Drehzahlbereich vorteilhaft aus. Während bei hohen Drehzahlen ein eher kurzes Saugrohr zielführend ist, erweist sich bei niedrigen Drehzahlen ein längeres Saugrohr als notwendig.

Um die beschriebenen Effekte dennoch - zumindest für die Optimierung des Ansaugvorganges - nutzbar zu machen, werden nach dem Stand der Technik verschiedene Konzepte vorgeschlagen.

Die US 2003/0233992 A1 beschreibt ein Luftansaugkanalsystem, bei dem in einem Sammelbehälter ein Halbrohrstück drehbar gelagert ist und zwischen zwei Positionen schaltbar ist. In einer ersten Position bildet dieses erste bewegliche Halbrohrstück zusammen mit einem zweiten ortsfesten Halbrohrstück, welches in eine Außenwand des Sammelbehälters eingearbeitet ist, einen Ansaugeintrittskanal, der als Verlängerung des eigentlichen in den Sammelbehälter mündenden Ansaugkanals dient. In der ersten Position weist der Ansaugkanal, der in dieser Position den Ansaugeintrittskanal mitumfaßt, seine maximale Gesamtlänge auf.

Durch Verdrehen des ersten Halbrohrstücks wird der in der ersten Position von den beiden Halbrohrstücken gebildete Ansaugeintrittskanal gewissermaßen zerlegt bzw. geöffnet, wobei die Gesamtlänge des Ansaugkanals dadurch um die Länge des dann nicht mehr vorhandenen Ansaugeintrittskanals reduziert wird. Folglich weist der Ansaugkanal in der zweiten Position seine minimale Länge auf.

Das in der US 2003/0233992 A1 beschriebene Luftansaugkanalsystem verfügt damit über sogenannte schaltbare Ansaugkanäle, die zwischen zwei verschiedenen Saugrohrlängen umgeschaltet werden können. Dadurch verfügen derartige Luftansaugkanalsystem sowohl über einen kurzen Ansaugkanal für hohe Drehzahlen als auch über einen längeren Ansaugkanal für niedrige Drehzahlen.

Ein schaltbarer Ansaugkanal läßt aber keine stufenlose Verstellung der Länge des Ansaugkanals zu, weshalb der Vorteil derartiger Systeme gegenüber herkömmlichen Ansaugkanälen mit unveränderlichen Kanallängen nur gering ist. Ein Verfahren der gattungsbildenden Art d.h. ein Verfahren gemäß dem Oberbegriff des Anspruchs 10 zur stufenlosen drehzahlabhängigen Variation der Länge l eines Ansaugkanals ist mit dem in der US 2003/0233992 A1 offenbarten Luftansaugkanalsystem nicht durchführbar.

Ein weiterer Lösungsansatz nach dem Stand der Technik besteht deshalb in einem Luftansaugkanalsystem mit stufenlos in der Länge verstellbaren Ansaugkanälen.

Ein derartiges Luftansaugkanalsystem wird beispielsweise in der US 2003/0177996 A1 beschrieben. Bei diesem Luftansaugkanalsystem sind die Ansaugkanäle mehrteilig d.h. modular in der Art aufgebaut, daß ein erstes bewegliches Teilrohrstück teleskopartig in ein zweites ortsfestes Teilrohrstück eingreift und in diesem zweiten Teilrohrstück verschiebbar gelagert ist. Durch Verschieben des ersten Teilrohrstückes, was durch ein Zusammenwirken von Zahnrädern und Zahnstangen bewerkstelligt werden kann und durch Drehung des ersten Teilrohrstückes um eine Achse erfolgt, wird die Länge des Ansaugkanals stufenlos verstellt und der jeweiligen Drehzahl angepaßt.

Als nachteilig an dem in der US 2003/0177996 A1 beschriebenen System muß der vergleichsweise hohe Raumbedarf angesehen werden, der dem grundsätzlichen Ziel der Motorenentwicklung entgegensteht, ein möglichst dichtes Packaging im Motorraum zu realisieren. Ursächlich verantwortlich für den hohen Raumbedarf ist die bogenförmige Ausbildung der Teilrohrstücke. Nachteilig ist auch, daß die beiden gebogen ausgebildeten Teilrohrstücke bei einer Rotation um die Drehachse hohe Trägheitsmomente hervorrufen, da der Abstand der Teilrohrstückmassen zur Drehachse vergleichsweise groß ist.

Große Abstände zur Drehachse sind insbesondere im Hinblick auf die für die Saugrohrabstimmung erforderliche Beschleunigung des Teilrohrstücks als nachteilig anzusehen. Insbesondere die in der US 2003/0177996 A1 beschriebene Ausführungsform, bei der zwei kreissegmentförmige Teilrohrstücke ineinander gedreht werden, um die Länge des Ansaugkanals zu vergrößern bzw. zu verkleinern, induziert hohe Zentripetalkräfte, da die zu bewegenden Rohrmassen weit vom Drehpunkt der Bewegung entfernt sind. Als kritisch sind derartige Systeme insbesondere im Hinblick auf den für die Praxis relevanten Betrieb der Brennkraftmaschine im Stadtverkehr anzusehen, bei dem häufig schnelle und große Drehzahländerungen auftreten, die eine ununterbrochene und schnelle Abstimmung der Ansaugkanallänge an die aktuelle Drehzahl erfordern, was mit hohen Beschleunigungen und entsprechend großen Massenkräften verbunden ist.

Von der Kinematik ähnliche Luftansaugkanalsysteme werden in den beiden deutschen Offenlegungsschriften DE 197 56 332 A1 und DE 198 30 508 A1 beschrieben. Dabei werden zwar keine Teilrohrstücke teleskopartig ineinander geschoben, um die Länge der Ansaugkanäle zu variieren. Der Ansaugkanal ist aber ebenfalls gekrümmt bzw. spiralförmig ausgebildet und die stufenlose Variation des Ansaugkanals erfolgt wiederum durch ein Verdrehen von Bauteilen.

Jeder Ansaugkanal führt einerseits zu einem Zylinder der Brennkraftmaschine und mündet anderseits über eine Eintrittsöffnung in einen Sammelbehälter des Ansaugtraktes. Durch ein Verdrehen der Eintrittsöffnung in eine andere Position wird die Länge des Ansaugkanals vergrößert bzw. verkleinert. Nachteilig an diesen Luftansaugkanalsystemen sind wiederum die vergleichsweise großen Trägheitskräfte bzw. Trägheitsmomente, die bei einer Variation bzw. Abstimmung der Saugrohrlänge auftreten. Darüber hinaus sind diese Systeme sehr komplex und kostenintensiv.

Vor diesem Hintergrund ist es die Aufgabe der vorliegenden Erfindung, ein Luftansaugkanalsystem der gattungsbildenden Art bereitzustellen, mit dem die nach dem Stand der Technik bekannten Nachteile überwunden werden, und das insbesondere - im Vergleich zu herkömmlichen Systemen nach dem Stand der Technik - nur geringe Trägheitskräfte bzw. Trägheitsmomente bei der Abstimmung der Saugrohrlänge hervorruft.

Eine weitere Teilaufgabe der vorliegenden Erfindung ist es, ein Verfahren zur stufenlosen drehzahlabhängigen Variation der Länge l eines Ansaugkanals eines Luftansaugkanalsystems einer Brennkraftmaschine aufzuzeigen.

Gelöst wird die erste Teilaufgabe durch ein Luftansaugkanalsystem für eine Brennkraftmaschine mit mindestens einem Ansaugkanal, der zur Versorgung der Brennkraftmaschine mit Verbrennungsluft bzw. Frischgemisch dient und hierzu einerseits zu einem Einlaßbereich mindestens eines Zylinders der Brennkraftmaschine führt und andererseits in einen Sammelbehälter mündet und dessen Länge l in Abhängigkeit von der Drehzahl der Brennkraftmaschine stufenlos veränderbar ist, und das dadurch gekennzeichnet ist, daß der mindestens eine Ansaugkanal mindestens zwei Rohrstücke, nämlich ein äußeres Rohrstück und ein inneres, zumindest teilweise in dem äußeren Rohrstück angeordnetes Rohrstück, umfaßt, wobei ein erstes Rohrstück ortsfest angeordnet ist, während ein zweites Rohrstück eine Verbindung mit dem ersten Rohrstück in der Art aufweist, daß eine Rotation dieses zweiten Rohrstückes um seine Längsachse gleichzeitig eine translatorische Bewegung des zweiten Rohrstückes relativ zum ersten Rohrstück in Richtung der Längsachse hervorruft, so daß durch Rotation des zweiten Rohrstückes die Länge l des mindestens einen Ansaugkanals stufenlos verstellbar ist.

Erfindungsgemäß werden zur Ausbildung des Ansaugkanals mindestens zwei Rohstücke verwendet, die zumindest teilweise ineinander stecken. Im Gegensatz zu dem in der US 2003/0177996 A1 beschriebenen Luftansaugkanalsystem, bei dem ein erstes bewegliches Teilrohrstück teleskopartig in ein zweites ortsfestes Teilrohrstück eingreift und ein Verschieben des ersten Teilrohrstückes durch Drehen dieses Teilrohrstückes um eine vergleichsweise weit beabstandete Achse erfolgt, wird erfindungsgemäß das zweite bewegliche Rohrstück um seine - als Drehachse fungierende - Längsachse gedreht und damit um eine - hinsichtlich der Masseverteilung des zweiten Rohrstückes - überaus vorteilhaft angeordnete nämlich sehr nahe angeordnete Achse. Diese Kinematik erfordert geradeförmig ausgebildete Rohrstücke, zumindest in den Rohrbereichen, die vom Drehen und Verschieben des zweiten Rohrstückes betroffen sind.

Erfmdungsgemäß umfaßt der mindestens eine Ansaugkanal mindestens zwei Rohrstücke, so daß auch Ausführungsformen des erfindungsgemäßen Luftansaugkanalsystems, bei denen der Ansaugkanal aus drei oder mehr Rohrstücken aufgebaut ist, ausgebildet werden können. Unabhängig von der tatsächlichen Anzahl der verwendeten Rohrstücke weisen sämtliche Ausführungsformen ein inneres und ein äußeres Rohrstück auf, wobei eines dieser beiden Rohrstücke ortsfest ist und das sogenannte erste Rohrstück bildet und das verbleibende, andere Rohrstück das zweite bewegliche Rohrstück darstellt.

Eine Variation der Saugrohrlänge l des Ansaugkanals erfolgt durch Verschieben der teleskopartig ineinandergreifenden Rohrstücke, wobei die translatorische Bewegung des Verschiebens durch eine Drehung, die dem zweiten Rohrstück von außen aufgezwungen wird, initiiert wird bzw. bedingt ist.

Der mindestens eine Ansaugkanal mündet in einen Sammelbehälter, von dem aus der Ansaugkanal mit Verbrennungsluft bzw. Frischgemisch versorgt wird. Während des Ladungswechsels wird die - bei Öffnen des Einlaßventils - in den Ansaugkanal entlassene Unterdruckwelle am offenen Ende des Ansaugkanals d. h. an der in den Sammelbehälter hineinreichenden Mündung als Überdruckwelle reflektiert, wodurch es zu einer Verdichtung der Zylinderfrischladung und damit zu einem gewissen Nachladeeffekt kommt.

Der mindestens eine Ansaugkanal mündet erfmdungsgemäß in den Einlaßbereich mindestens eines Zylinders. D. h. der mindestens eine Ansaugkanal kann einen oder mehrere Zylinder mit Frischgemisch bzw. Verbrennungsluft versorgen, wobei - falls jeder Zylinder mit einem separaten Ansaugkanal versorgt wird - sowohl die Versorgung eines Einlaßventils als auch die Versorgung von zwei Einlaßventilen möglich ist. Bei Zylindern mit zwei Einlaßventilen ist es darüber hinaus möglich, jedes Einlaßventil mit einem separaten Ansaugkanal auszustatten.

Durch das erfindungsgemäße Luftansaugkanalsystem wird somit die erste der Erfindung zugrunde liegende Aufgabe gelöst, nämlich ein Luftansaugkanalsystem bereitzustellen, das im Vergleich zu herkömmlichen Systemen nur geringe Trägheitskräfte bzw. Trägheitsmomente bei der Abstimmung der Saugrohrlänge hervorruft.

Weitere vorteilhafte Ausgestaltungen des Luftansaugkanalsystems werden im Zusammenhang mit den Unteransprüchen erläutert. Dabei wird auch sichtbar werden, welche Möglichkeiten das erfindungsgemäße Luftansaugkanalsystem über die oben bereits dargelegten Vorteile hinaus eröffnet.

Vorteilhaft sind Ausführungsformen des Luftansaugkanalsystems, bei denen die Verbindung der mindestens zwei Rohrstücke im wesentlichen gasdicht ist, wobei die Verbindung vorzugsweise vollständig gasdicht sein sollte. Vorteile bietet diese Ausführungsform dahingehend, daß während des Ladungswechsels im Rahmen des Ansaugvorganges möglichst wenig Frischgemisch bzw. Verbrennungsluft aus dem Ansaugkanal entweicht. Das entwichene Frischgemisch bzw. die entwichene Verbrennungsluft steht nicht mehr zur Füllung des Brennraums des mindestens einen Zylinders zur Verfügung, was die Qualität des Ladungswechsels nachteilig beeinflußt und insbesondere den Füllungsgrad verschlechtert.

Vorteilhaft sind Ausführungsformen des Luftansaugkanalsystems, bei denen das erste Rohrstück ein erstes Gewinde und das zweite Rohrstück ein zweites, mit dem ersten Gewinde in Eingriff befindliches Gewinde aufweist, wobei diese beiden in Eingriff befmdlichen Gewinde die Verbindung der mindestens zwei Rohrstücke bilden.

Der Begriff Gewinde ist dabei im Rahmen der vorliegenden Erfindung dahingehend auszulegen, daß Flanken - auch wie bei Zahnrädern - paarweise ineinander greifen. Es ist also nicht erforderlich, daß die Flanken zusammenhängend ausgebildet sind und sich ähnlich einer Spirale in Richtung der Längsachse winden. Eine Zahnstange ist in diesem Sinn ebenfalls ein Gewinde. Damit erfaßt der Begriff Gewinde im Rahmen der vorliegenden Erfindung einen weiteren Bereich als nach dem herkömmlichen Verständnis, insbesondere umfaßt der Bergriff neben den herkömmlichen spiralförmigen d.h. schraubenförmigen Gewindearten - wie sie bei der zuvor beschriebenen Ausführungsform zum Einsatz kommen - auch zahnstangenähnliche Ausbildungen, beispielsweise im Zusammenhang mit dem Verstellgewinde, was weiter unten noch näher erläutert werden wird.

Ein Gewinde stellt ein geeignetes Mittel zum Verschieben des zweiten Rohrstücks dar, wobei die Rotation des zweiten Rohrstückes zu einer überlagerten translatorischen Bewegung des zweiten Rohrstückes in Richtung der Längsachse führt. Die Drehbewegung des zweiten Rohrstücks wird gewissermaßen in eine translatorische Bewegung transformiert. Zudem können die beiden Gewinde als integrale Bestandteile der Rohrstücke d.h. einteilig mit dem zugehörigen Rohrstück ausgebildet werden. Mittels der Steigung des Gewindes kann das Verhältnis von translatorischem Verschiebeweg zu dem Drehwinkel der Rotation wunschgemäß eingestellt werden.

Vorteilhaft sind Ausführungsformen des Luftansaugkanalsystems, bei denen das zweite Rohrstück Verstellmittel aufweist, mit denen es um die Längsachse drehbar ist. Vorzugsweise weist das zweite Rohrstück als Verstellmittel ein erstes Verstellgewinde auf, das sich mit einem zweiten Verstellgewinde eines Verstellrades in Eingriff befmdet.

Vorteilhaft sind insbesondere Ausführungsformen des Luftansaugkanalsystems, bei denen das erste Verstellgewinde aus in Richtung der Längsachse des zweiten Rohrstückes ausgerichteten Gewindezähnen gebildet wird. D. h. das erste Verstellgewinde hat - ähnlich einer Zahnstange - geradlinige Gewindezähne, die beabstandet zueinander angeordnet sind und die nicht zusammenhängend und spiralförmig wie bei einer Schraube angeordnet sind.

Vorteilhaft sind Ausführungsformen des Luftansaugkanalsystems, bei denen das erste Verstellgewinde auf der äußeren Mantelfläche des zweiten Rohrstücks vorgesehen ist. Dies vereinfacht die Anordnung eines Verstellrades und trägt dem Umstand Rechnung, daß sich innerhalb des Rohrstücks während des Ladungswechsels eine Strömung ausbildet, die möglichst frei von Störungen bleiben sollte.

Vorteilhaft sind Ausführungsformen des Luftansaugkanalsystems, bei denen zum Antrieb des Verstellrades ein Antriebsmittel vorgesehen ist.

Vorteilhaft sind Ausführungsformen des Luftansaugkanalsystems, bei denen die mindestens zwei Rohrstücke im wesentlichen aus Kunststoff ausgebildet sind. Vorteile bietet diese Ausführungsform aufgrund des niedrigen Gewichts von Kunststoff, wodurch die Trägheitskräfte bzw. Trägheitsmomente, die bei der Bewegung und Beschleunigung des zweiten Rohrstücks auftreten, sehr niedrig gehalten werden. Zudem vereinfacht die Verwendung von Kunststoff die Fertigung der Rohrstücke, insbesondere die Integration weiterer Elemente, wie beispielsweise die integrale Ausbildung von Gewinden zum Verschieben des zweiten Rohrstücks.

Die zweite der Erfmdung zugrunde liegende Teilaufgabe wird gelöst durch ein Verfahren zur stufenlosen drehzahlabhängigen Variation der Länge l eines Ansaugkanals eines Luftansaugkanalsystems einer Brennkraftmaschine, wobei der Ansaugkanal zur Versorgung der Brennkraftmaschine mit Verbrennungsluft bzw. Frischgemisch dient und hierzu einerseits zu einem Einlaßbereich mindestens eines Zylinders der Brennkraftmaschine führt und andererseits in einen Sammelbehälter mündet, und das dadurch gekennzeichnet ist, daß
■ zur Ausbildung des Ansaugkanals mindestens zwei Rohrstücke, nämlich ein äußeres Rohrstück und ein inneres, zumindest teilweise in dem äußeren Rohrstück angeordnetes Rohrstück, verwendet wird,
■ ein erstes Rohrstück ortsfest angeordnet wird, während ein zweites Rohrstück mit dem ersten Rohrstück in der Art verbunden wird, daß bei Drehung des zweiten Rohrstückes um seine Längsachse gleichzeitig eine translatorische Bewegung des zweiten Rohrstückes relativ zum ersten Rohrstück in Richtung der Längsachse hervorrufen wird, so daß durch Drehung des zweiten Rohrstückes die Länge l des Ansaugkanals stufenlos verstellt wird.

Das bereits für das erfindungsgemäße Luftansaugkanalsystem Gesagte gilt auch für das erfindungsgemäße Verfahren.

Vorteilhaft sind dabei Ausführungsformen des Verfahrens, bei denen mit zunehmender Drehzahl das zweite Rohrstück in der Art gedreht wird, daß die Länge l des Ansaugkanals abnimmt.

Vorteilhaft sind auch Ausführungsformen des Verfahrens, bei denen mit abnehmender Drehzahl das zweite Rohrstück in der Art gedreht wird, daß die Länge l des Ansaugkanals zunimmt.

Die beiden zuletzt genannten Verfahrensvarianten tragen den theoretischen Ausführungen, die weiter oben im Rahmen der Beschreibungseinleitung gemacht wurden, Rechnung. Insbesondere dem Umstand, daß die optimierte Saugrohrlänge l umgekehrt proportional zur Drehzahl n der Brennkraftmaschine ist. Folglich wird mit zunehmender Drehzahl ein kürzerer Ansaugkanal und mit abnehmender Drehzahl ein längerer Ansaugkanal bevorzugt. Verfahrensvarianten, die eine entsprechend Variation der Saugrohrlänge vorsehen - wie die beiden oben genannten Verfahrensvarianten - sind daher besonders vorteilhaft.

Im folgenden wird die Erfindung anhand von zwei Ausführungsbeispielen gemäß den Figuren 1a bis 2b näher beschrieben. Hierbei zeigt:
- Fig. 1a: schematisch eine erste Ausführungsform des Luftansaugkanalsystems im Längsschnitt, wobei der Ansaugkanal eine Länge l₁ für mittlere Drehzahlen aufweist,
- Fig. 1b: schematisch die in Figur 1a dargestellte Ausführungsform im Längsschnitt, wobei der Ansaugkanal eine Länge l₂ für sehr niedrige Drehzahlen aufweist,
- Fig. 2a: schematisch eine zweite Ausführungsform des Luftansaugkanalsystems im Längsschnitt, wobei der Ansaugkanal eine Länge l₁ für mittlere Drehzahlen aufweist, und
- Fig. 2b: schematisch die in Figur 2a dargestellte Ausführungsform im Längsschnitt, wobei der Ansaugkanal eine Länge l₂ für sehr niedrige Drehzahlen aufweist.

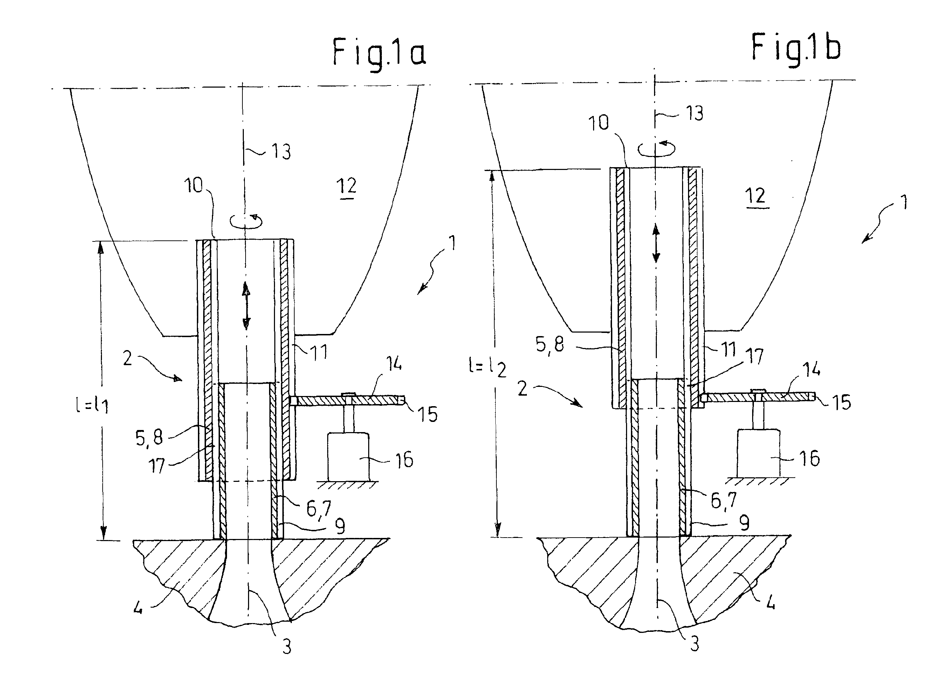

Figur 1a zeigt schematisch eine erste Ausführungsform des Luftansaugkanalsystems 1 im Längsschnitt, wobei der Ansaugkanal eine Länge l₁ für mittlere Drehzahlen aufweist.

Der Ansaugkanal 2 versorgt einen Zylinder einer Brennkraftmaschine mit Verbrennungsluft bzw. Frischgemisch und führt von einem Sammelbehälter 12 zu einem Einlaßbereich 3 des Zylinders im Zylinderkopf 4.

Der Ansaugkanal 2 ist modular aufgebaut und umfaßt zwei Rohrstücke 7,8, nämlich ein äußeres Rohrstück 5 und ein inneres Rohrstück 6. Das innere Rohrstück 6 ragt in das äußere Rohrstück 5 hinein und ist auf diese Weise zumindest teilweise in dem äußeren Rohrstück angeordnet.

Das erste ortsfeste Rohrstück 7 wird - bei dem in den Figuren 1a und 1b dargestellten Ausführungsbeispiel - durch das innere Rohrstück 6 gebildet. Das zweite Rohrstück 8 ist beweglich auf dem ersten Rohrstück angeordnet, wobei das zweite Rohrstück 8 eine Verbindung 17 mit dem ersten Rohrstück 7 in der Art aufweist, daß eine Rotation (siehe Drehpfeil) dieses zweiten Rohrstückes 8 um seine Längsachse 13 gleichzeitig eine translatorische Bewegung (siehe Doppelpfeil) des zweiten Rohrstückes 8 relativ zum ersten Rohrstück 7 in Richtung der Längsachse 13 hervorruft.

Auf diese Weise kann durch Rotation des zweiten Rohrstückes 8 die Länge l des Ansaugkanals 2 stufenlos verstellt werden, wobei das zweite bewegliche Rohrstück 8 in Figur 1a halb ausgefahren bzw. halb eingefahren ist. Das Ansaugrohr 2 ist damit auf mittlere Drehzahlen abgestimmt.

Zur Ausbildung der Verbindung 17 der beiden Rohrstücke 7,8 ist das erste Rohrstück 7 mit einem ersten Gewinde 9 und das zweite Rohrstück 8 mit einem zweiten Gewinde 10 ausgestattet, wobei sich diese beiden Gewinde 9,10 miteinander in Eingriff befinden.

Zusätzlich weist das zweite Rohrstück 8 ein erstes Verstellgewinde 11 auf, das sich mit einem zweiten Verstellgewinde 15 eines Verstellrades 14 in Eingriff befindet. Das Verstellrad 14 wird mittels eines Verstellmotors 16 angetrieben und versetzt auf diese Weise das äußere, zweite Rohrstück 5,8 in Drehung, wodurch dieses Rohrstück 5,8 gleichzeitig translatorisch in Richtung seiner Längsachse 13 verschoben wird.

Figur 1b zeigt schematisch die in Figur 1a dargestellte Ausführungsform, wobei der Ansaugkanal eine Länge l₂ aufweist und damit auf sehr niedrige Drehzahlen abgestimmt ist.

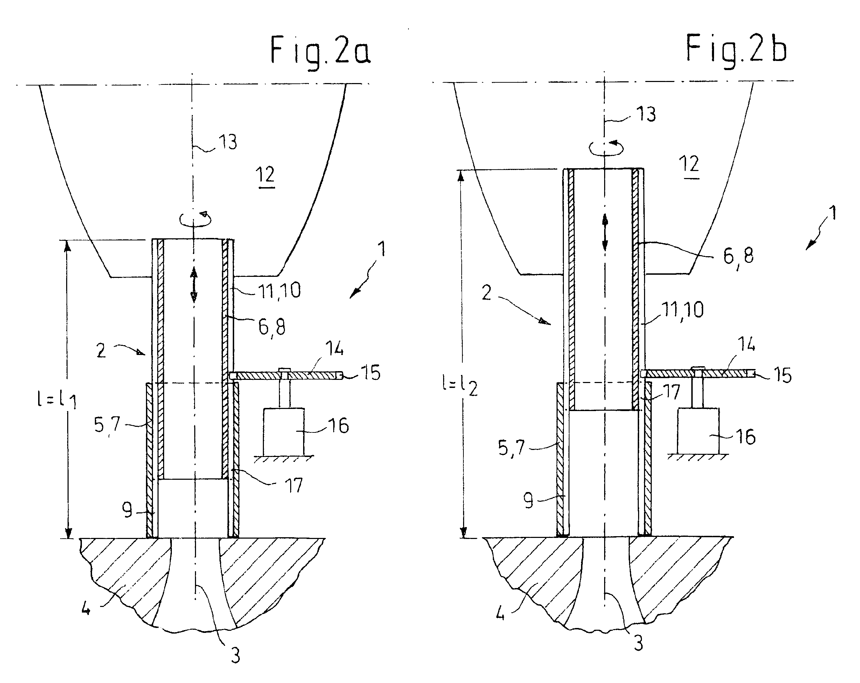

Die Figuren 2a und 2b zeigen schematisch in einem Längsschnitt eine zweite Ausführungsform des Luftansaugkanalsystems im Längsschnitt, wobei der Ansaugkanal einmal eine Länge l₁ für mittlere Drehzahlen aufweist (Figur 2a) und einmal mit einer Länge l₂ auf sehr niedrige Drehzahlen abgestimmt ist (Figur 2b).

Im Unterschied zu der in den Figuren 1a und 1b dargestellten Ausführungsform wird das erste ortsfeste Rohrstück 7 durch das äußere Rohrstück 5 gebildet. Im übrigen wird bezug genommen auf die Figuren 1a und 1b. Für dieselben Bauteile wurden dieselben Bezugszeichen verwendet.

Die in den Figuren 2a und 2b dargestellte Ausführungsform weist den Vorteil auf, daß das zweite Gewinde 10 des inneren Rohrstücks 6 gleichzeitig als erstes Verstellgewinde 11 dient.

### Bezugszeichen

- 1: Luftansaugkanalsystem
- 2: Ansaugkanal
- 3: Einlaßbereich
- 4: Zylinderkopf
- 5: äußeres Rohrstück
- 6: inneres Rohrstück
- 7: erstes Rohrstück
- 8: zweites Rohrstück
- 9: erstes Gewinde
- 10: zweites Gewinde
- 11: erstes Verstellgewinde
- 12: Sammelbehälter
- 13: Drehachse, Längsachse
- 14: Zahnrad, Verstellrad
- 15: zweites Verstellgewinde
- 16: Verstellmotor
- 17: Verbindung

- A: Schallgeschwindigkeit
- l: Länge des Ansaugkanals
- l₁: erste Länge des Ansaugkanals
- l₂: zweite Länge des Ansaugkanals
- n: Drehzahl

## Patentansprüche

1. Luftansaugkanalsystem (1) für eine Brennkraftmaschine mit mindestens einem Ansaugkanal (2), der zur Versorgung der Brennkraftmaschine mit Verbrennungsluft bzw. Frischgemisch dient und hierzu einerseits zu einem Einlaßbereich (3) mindestens eines Zylinders der Brennkraftmaschine führt und andererseits in einen Sammelbehälter (12) mündet und dessen Länge 1 in Abhängigkeit von der Drehzahl der Brennkraftmaschine stufenlos veränderbar ist, wobei der mindestens eine Ansaugkanal (2) mindestens zwei Rohrstücke (7,8), nämlich ein äußeres Rohrstück (5) und ein inneres, zumindest teilweise in dem äußeren Rohrstück (5) angeordnetes Rohrstück (6), umfaßt, wobei ein erstes Rohrstück (7) ortsfest angeordnet ist, und **dadurch gekennzeichnet, daß** ein zweites Rohrstück (8) eine Verbindung (17) mit dem ersten Rohrstück (7) in der Art aufweist, daß eine Rotation dieses zweiten Rohrstückes (8) um seine Längsachse (13) gleichzeitig eine translatorische Bewegung des zweiten Rohrstückes (8) relativ zum ersten Rohrstück (7) in Richtung der Längsachse (13) hervorruft, so daß durch Rotation des zweiten Rohrstückes (8) die Länge 1 des mindestens einen Ansaugkanals (2) stufenlos verstellbar ist.

2. Luftansaugkanalsystem (1) nach einem der vorherigen Ansprüche, **dadurch gekennzeichnet, daß** die Verbindung (17) der mindestens zwei Rohrstücke (7,8) im wesentlichen gasdicht ist.

3. Luftansaugkanalsystem (1) nach einem der vorherigen Ansprüche, **dadurch gekennzeichnet, daß** das erste Rohrstück (7) ein erstes Gewinde (9) und das zweite Rohrstück (8) ein zweites, mit dem ersten Gewinde (9) in Eingriff befindliches Gewinde (10) aufweist, wobei diese beiden in Eingriff befindlichen Gewinde (9,10) die Verbindung (17) der mindestens zwei Rohrstücke (7,8) bilden.

4. Luftansaugkanalsystem (1) nach einem der vorherigen Ansprüche, **dadurch gekennzeichnet, daß** das zweite Rohrstück (8) Verstellmittel aufweist, mit denen es um die Längsachse (13) drehbar ist.

5. Luftansaugkanalsystem (1) nach Anspruch 4, **dadurch gekennzeichnet, daß** das zweite Rohrstück (8) als Verstellmittel ein erstes Verstellgewinde (11) aufweist, das sich mit einem zweiten Verstellgewinde (15) eines Verstellrades (14) in Eingriff befindet.

6. Luftansaugkanalsystem (1) nach Anspruch 5, **dadurch gekennzeichnet, daß** das erste Verstellgewinde (11) aus in Richtung der Längsachse (13) des zweiten Rohrstückes (8) ausgerichteten Gewindezähnen gebildet wird.

7. Luftansaugkanalsystem (1) nach einem der vorherigen Ansprüche, **dadurch gekennzeichnet, daß** das erste Verstellgewinde (11) auf der äußeren Mantelfläche des zweiten Rohrstücks (8) vorgesehen ist.

8. Luftansaugkanalsystem (1) nach einem der vorherigen Ansprüche, **dadurch gekennzeichnet, daß** zum Antrieb des Verstellrades (14) ein Antriebsmittel (16) vorgesehen ist.

9. Luftansaugkanalsystem (1) nach einem der vorherigen Ansprüche, **dadurch gekennzeichnet, daß** die mindestens zwei Rohrstücke (7,8) im wesentlichen aus Kunststoff ausgebildet sind.

10. Verfahren zur stufenlosen drehzahlabhängigen Variation der Länge 1 eines Ansaugkanals (2) eines Luftansaugkanalsystems (1) einer Brennkraftmaschine, wobei der Ansaugkanal (2) zur Versorgung der Brennkraftmaschine mit Verbrennungsluft bzw. Frischgemisch dient und hierzu einerseits zu einem Einlaßbereich (3) mindestens eines Zylinders der Brennkraftmaschine führt und andererseits in einen Sammelbehälter (12) mündet, wobei
■ zur Ausbildung des Ansaugkanals (2) mindestens zwei Rohrstücke (7,8), nämlich ein äußeres Rohrstück (5) und ein inneres, zumindest teilweise in dem äußeren Rohrstück (5) angeordnetes Rohrstück (6), verwendet wird, **dadurch gekennzeichnet, daß**
■ ein erstes Rohrstück (7) ortsfest angeordnet wird, während ein zweites Rohrstück (8) mit dem ersten Rohrstück (7) in der Art verbunden wird, daß bei Drehung des zweiten Rohrstückes (8) um seine Längsachse (13) gleichzeitig eine translatorische Bewegung des zweiten Rohrstückes (8) relativ zum ersten Rohrstück (7) in Richtung der Längsachse (13) hervorrufen wird, so daß durch Drehung des zweiten Rohrstückes (8) die Länge 1 des Ansaugkanals (2) stufenlos verstellt wird.

11. Verfahren nach Anspruch 10, **dadurch gekennzeichnet, daß** mit zunehmender Drehzahl das zweite Rohrstück in der Art gedreht wird, daß die Länge 1 des Ansaugkanals abnimmt.

12. Verfahren nach Anspruch 10 oder 11, **dadurch gekennzeichnet, daß** mit abnehmender Drehzahl das zweite Rohrstück in der Art gedreht wird, daß die Länge 1 des Ansaugkanals zunimmt.

## Claims

1. Air intake duct system (1) for an internal combustion engine having at least one intake duct (2) which serves to supply the internal combustion engine with combustion air or fresh mixture and which, for this purpose, firstly leads to an inlet region (3) of at least one cylinder of the internal combustion engine and secondly opens out into a collecting tank (12), and whose length 1 can be continuously varied as a function of the rotational speed of the internal combustion engine, with the at least one intake duct (2) comprising at least two tube pieces (7,8), specifically an outer tube piece (5) and an inner tube piece (6) which is arranged at least partially in the outer tube piece (5), with a first tube piece (7) being arranged in a positionally fixed manner, and **characterized in that** a second tube piece (8) has a connection (17) to the first tube piece (7) in such a way that a rotation of said second tube piece (8) about its longitudinal axis (13) simultaneously generates a translatory movement of the second tube piece (8) relative to the first tube piece (7) in the direction of the longitudinal axis (13), such that the length 1 of the at least one intake duct (2) can be continuously adjusted by rotating the second tube piece (8).

2. Air intake duct system (1) according to one of the preceding claims, **characterized in that** the connection (17) of the at least two tube pieces (7,8) is substantially gas-tight.

3. Air intake duct system (1) according to one of the preceding claims, **characterized in that** the first tube piece (7) has a first thread (9) and the second tube piece (8) has a second thread (10) which is in engagement with the first thread (9), with said two threads (9, 10) which are in engagement forming the connection (17) of the at least two tube pieces (7,8).

4. Air intake duct system (1) according to one of the preceding claims, **characterized in that** the second tube piece (8) has adjusting means, by way of which said second tube piece (8) can be rotated about the longitudinal axis (13).

5. Air intake duct system (1) according to Claim 4, **characterized in that** the second tube piece (8) has, as an adjusting means, a first adjusting thread (11) which is in engagement with a second adjusting thread (15) of an adjusting wheel (14).

6. Air intake duct system (1) according to Claim 5, **characterized in that** the first adjusting thread (11) is formed from thread teeth which are aligned in the direction of the longitudinal axis (13) of the second tube piece (8).

7. Air intake duct system (1) according to one of the preceding claims, **characterized in that** the first adjusting thread (11) is provided on the outer lateral surface of the second tube piece (8).

8. Air intake duct system (1) according to one of the preceding claims, **characterized in that** a drive means (16) is provided for driving the adjusting wheel (14).

9. Air intake duct system (1) according to one of the preceding claims, **characterized in that** the at least two tube pieces (7,8) are formed substantially from plastic.

10. Method for the continuous, rotational-speed dependent variation of the length 1 of an intake duct (2) of an air intake duct system (1) of an internal combustion engine, with the intake duct (2) serving to supply the internal combustion engine with combustion air or fresh mixture and, for this purpose, firstly leading to an inlet region (3) of at least one cylinder of the internal combustion engine and secondly opening out into a collecting tank (12),
• with at least two tube pieces (7,8), specifically an outer tube piece (5) and an inner tube piece (6) which is at least partially arranged in the outer tube piece (5), being used to form the intake duct (2),
**characterized in that**
• a first tube piece (7) is arranged in a positionally fixed manner, while a second tube piece (8) is connected to the first tube piece (7) in such a way that, in the event of a rotation of the second tube piece (8) about its longitudinal axis (13), a translatory movement of the second tube piece (8) relative to the first tube piece (7) in the direction of the longitudinal axis (13) is simultaneously generated, such that the length 1 of the intake duct (2) is continuously adjusted by rotating the second tube piece (8).

11. Method according to Claim 10, **characterized in that**, with increasing rotational speed, the second tube piece is rotated such that the length 1 of the intake duct decreases.

12. Method according to Claim 10 or 11, **characterized in that**, with decreasing rotational speed, the second tube piece is rotated such that the length 1 of the intake duct increases.

## Revendications

1. Système de conduite d'admission d'air (1) pour un moteur à combustion interne, avec au moins une conduite d'admission (2), qui sert pour l'alimentation du moteur à combustion interne en air de combustion ou en mélange frais et qui à cet effet conduit d'une part à une zone d'admission (3) d'au moins un cylindre du moteur à combustion interne et débouche d'autre part dans un réservoir collecteur (12), et dont la longueur 1 est ajustable en continu en fonction de la vitesse de rotation du moteur à combustion interne, dans lequel ladite au moins une conduite d'admission (2) comprend au moins deux éléments tubulaires (7, 8), à savoir un élément tubulaire extérieur (5) et un élément tubulaire intérieur (6), disposé au moins en partie dans l'élément tubulaire extérieur (5), dans lequel un premier élément tubulaire (7) est immobile, **caractérisé en ce qu'**un deuxième élément tubulaire (8) présente une liaison (17) avec le premier élément tubulaire (7) de telle manière qu'une rotation de ce deuxième élément tubulaire (8) autour de son axe longitudinal (13) provoque en même temps un mouvement de translation du deuxième élément tubulaire (8) par rapport au premier élément tubulaire (7) dans la direction de l'axe longitudinal (13), de telle manière que la longueur 1 de ladite au moins une conduite d'admission (2) soit ajustable en continu par la rotation du deuxième élément tubulaire (8).

2. Système de conduite d'admission d'air (1) selon la revendication 1, **caractérisé en ce que** la liaison (17) des au moins deux éléments tubulaires (7, 8) est essentiellement étanche au gaz.

3. Système de conduite d'admission d'air (1) selon l'une quelconque des revendications précédentes, **caractérisé en ce que** le premier élément tubulaire (7) présente un premier filet (9) et le deuxième élément tubulaire (8) présente un deuxième filet (10), qui se trouve en prise avec le premier filet (9), dans lequel ces deux filets (9, 10) en prise forment la liaison (17) des au moins deux éléments tubulaires (7, 8).

4. Système de conduite d'admission d'air (1) selon l'une quelconque des revendications précédentes, **caractérisé en ce que** le deuxième élément tubulaire (8) comporte des moyens de réglage, à l'aide desquels il peut tourner autour de l'axe longitudinal (13).

5. Système de conduite d'admission d'air (1) selon la revendication 4, **caractérisé en ce que** le deuxième élément tubulaire (8) comporte comme moyens de réglage un premier filet de réglage (11), qui se trouve en prise avec un deuxième filet de réglage (15) d'une roue de réglage (14).

6. Système de conduite d'admission d'air (1) selon la revendication 5, **caractérisé en ce que** le premier filet de réglage (11) est formé par des dents de filet orientées dans la direction de l'axe longitudinal (13) du deuxième élément tubulaire (8).

7. Système de conduite d'admission d'air (1) selon l'une quelconque des revendications précédentes, **caractérisé en ce que** le premier filet de réglage (11) est prévu sur la surface latérale extérieure du deuxième élément tubulaire (8).

8. Système de conduite d'admission d'air (1) selon l'une quelconque des revendications précédentes, **caractérisé en ce qu'**il est prévu un moyen d'entraînement (16) pour l'entraînement de la roue de réglage (14).

9. Système de conduite d'admission d'air (1) selon l'une quelconque des revendications précédentes, **caractérisé en ce que** les au moins deux éléments tubulaires (7, 8) sont réalisés essentiellement en matière synthétique.

10. Procédé pour faire varier en continu, en fonction de la vitesse de rotation, la longueur 1 d'une conduite d'admission (2) d'un système de conduite d'admission d'air (1) d'un moteur à combustion interne, dans lequel la conduite d'admission (2) sert pour l'alimentation du moteur à combustion interne en air de combustion ou en mélange frais et à cet effet conduit d'une part à une zone d'admission (3) d'au moins un cylindre du moteur à combustion interne et débouche d'autre part dans un réservoir collecteur (12), dans lequel
• on utilise pour former la conduite d'admission (2) au moins deux éléments tubulaires (7, 8), à savoir un élément tubulaire extérieur (5) et un élément tubulaire intérieur (6), disposé au moins en partie dans l'élément tubulaire extérieur (5),
**caractérisé en ce que**
• un premier élément tubulaire (7) est immobile, tandis qu'un deuxième élément tubulaire (8) est relié au premier élément tubulaire (7) de telle manière que, lors d'une rotation du deuxième élément tubulaire (8) autour de son axe longitudinal (13), on provoque en même temps un mouvement de translation du deuxième élément tubulaire (8) par rapport au premier élément tubulaire (7) dans la direction de l'axe longitudinal (13), de telle manière que l'on règle en continu la longueur 1 de la conduite d'admission (2) par la rotation du deuxième élément tubulaire (8).

11. Procédé selon la revendication 10, **caractérisé en ce que** le deuxième élément tubulaire tourne, lorsque la vitesse de rotation augmente, de façon à réduire la longueur 1 de la conduite d'admission.

12. Procédé selon la revendication 10 ou 11, **caractérisé en ce que** le deuxième élément tubulaire tourne, lorsque la vitesse de rotation diminue, de façon à augmenter la longueur 1 de la conduite d'admission.
